# FASCICULE DE BREVET EUROPEEN

(11) **EP 2 576 988 B1**
(45) Date de publication et mention de la délivrance du brevet: **26.11.2014**
(21) Numéro de dépôt: 11726921.7
(22) Date de dépôt: 27.05.2011
(51) Int. Cl.: F01D 5/28, G01N 25/72

(54) **MESURE DE L'ENDOMMAGEMENT D'UNE BARRIERE THERMIQUE D'AUBE DE TURBINE**
MESSUNG DER BESCHÄDIGUNG EINER TURBINENSCHAUFELWÄRMESPERRE
MEASURING THE DAMAGE TO A TURBINE-BLADE THERMAL BARRIER

(30) Priorité: 03.06.2010 FR 1054371
(43) Date de publication de la demande: 10.04.2013
(73) Titulaire: Snecma, 75015 Paris (FR)
(72) Inventeur: MISTRAL, Quentin, F-92120 Montrouge (FR)
(74) Mandataire: Gevers France
(86) Numéro de dépôt international: PCT/FR2011/051227
(87) Numéro de publication internationale: WO 2011/151582

(56) Documents cités:
- EP-A1- 0 783 043
- EP-A1- 1 494 020
- EP-A1- 1 852 697
- WO-A1-2009/118199

## Description

Le domaine de la présente invention est celui des turbomachines et, plus particulièrement celui de la durée de vie des pièces de ces turbomachines qui sont soumises à de fortes températures.

Les pièces des parties chaudes d'une turbomachine et en particulier les aubes de turbine sont soumises, en utilisation, à des conditions de température extrêmement élevées et des protections ont été imaginées pour leurs permettre de résister à ces conditions extrêmes. Parmi celles-ci figure le dépôt d'un revêtement, appelé barrière thermique, sur leur face externe, qui protège le métal dans lequel elles sont formées. Une barrière thermique se compose généralement d'une couche céramique d'environ une centaine de microns, qui est déposée perpendiculairement à la surface de la couche métallique. Une sous-couche en aluminium, de quelques dizaines de microns, placée entre la céramique et le substrat métallique, complète la barrière thermique en assurant la liaison entre ces deux composants ainsi que la protection du métal de l'aube contre l'oxydation.

La céramique présente l'inconvénient de ne se dilater thermiquement que très faiblement alors que le substrat qui forme l'aube, est réalisé en un métal de type superalliage qui présente un grand coefficient de dilatation. La différence de dilatation est compensée par la réalisation de la céramique sous une forme colonnaire, les colonnes pouvant s'écarter les unes des autres pour s'adapter à la nouvelle largeur du substrat.

Une des conséquences en est que de l'oxygène, qui est présent dans les gaz qui circulent dans la veine de la turbomachine, vient en contact de l'aluminium de la sous-couche et l'oxyde progressivement. On constate ainsi un vieillissement de la barrière thermique, qui est fonction de l'épaisseur de la couche d'alumine produite. Arrivé à un certain niveau d'endommagement la sous-couche d'aluminium n'assure plus sa fonction d'élasticité, des décollements apparaissent et des écaillages de la barrière thermique se produisent. Le métal du substrat n'est alors plus protégé et l'aube risque de se dégrader très rapidement.

Il est donc important de connaître le niveau d'endommagement de la barrière thermique et de prévenir l'apparition de ces écaillages. De nombreuses techniques ont été imaginées pour connaître l'état de la barrière thermique et savoir s'il est possible de maintenir une aube en utilisation. Parmi celles-ci on connaît l'examen visuel, qui ne détecte un défaut que lorsqu'un écaillage s'est déjà produit, la thermographie infrarouge ou bien encore la piézospectroscopie. La thermographie IR n'a pour l'instant été utilisée, comme c'est le cas pour la demande de brevet EP 1494020, que pour détecter des décollements dans la sous-couche d'aluminium, qui sont préliminaires à l'écaillage, par le fait qu'ils modifient les propriétés thermiques locale du produit. Mais elle ne fonctionne que lorsqu'un défaut est déjà apparu. La piézospectroscopie mesure la contrainte existant à l'interface entre la barrière thermique en céramique et la sous-couche en aluminium. Tant que la barrière thermique adhère à la pièce on mesure une contrainte à cette interface et on sait que la barrière est saine, alors qu'une absence de contrainte traduit l'apparition d'une fissure à cette interface. Là encore la détection n'intervient qu'après l'apparition d'un défaut.

Les méthodes existantes, qui ne fonctionnent que par détection d'un défaut, ne permettent pas de prévoir la durée de vie restante d'une pièce, ni d'intervenir sur elle avant que le dommage soit trop important.

La présente invention a pour but de remédier à ces inconvénients en proposant une méthode de mesure du vieillissement d'une barrière thermique qui ne soit pas tributaire de l'apparition préalable d'un défaut.

A cet effet, l'invention a pour objet un procédé d'évaluation de l'endommagement d'une barrière thermique déposée sur la surface d'une aube de turbine réalisée dans un substrat métallique, ladite barrière thermique comprenant une sous-couche en aluminium et une couche en matériau céramique à structure colonnaire orientée perpendiculairement audit substrat, ladite sous-couche étant positionnée entre ledit substrat et la dite couche céramique, ladite pièce étant destinée à être placée en utilisation au contact d'un milieu gazeux oxydant et générateur dudit endommagement par oxydation de ladite sous-couche, ledit endommagement étant défini par l'épaisseur de métal oxydé figurant dans ladite sous-couche, caractérisé en ce qu'il comprend une première étape d'étalonnage comprenant au moins les sous-étapes suivantes :
- sélection d'un nombre déterminé de pièces d'étalonnage réalisées dans ledit substrat et recouvertes de ladite barrière thermique, lesdites pièces ayant subi des endommagements par exposition durant des durées différentes à des conditions d'oxydation représentatives de ladite utilisation,
- exposition, pendant un temps donné, desdites pièces d'étalonnage à un rayonnement électromagnétique,
- mesure de la température obtenue en surface au bout du temps donné, pour chaque pièce d'étalonnage,
- établissement d'une courbe d'étalonnage reliant l'augmentation de température mesurée à l'endommagement subi,
   et une seconde étape de mesure de l'endommagement de la barrière thermique de ladite aube comprenant les sous-étapes suivantes :
- exposition audit rayonnement de la pièce à évaluer pendant ladite durée,
- mesure de la température obtenue en surface au bout dudit temps donné,
- report de l'augmentation de température mesurée au bout de la ladite durée sur la courbe d'étalonnage, et
- extraction de l'endommagement à partir de ladite courbe d'étalonnage.

L'élévation de la température sous l'action du rayonnement appliqué pendant une durée donnée est révélatrice de l'épaisseur de la couche d'alumine qui s'est formé au cours des endommagements successifs subis par la pièce à évaluer. A l'aide d'un étalonnage effectué sur des échantillons dont on connait a priori l'endommagement on peut déterminer l'endommagement subi par la barrière thermique d'une pièce à la seule lecture de l'augmentation de température observée.

De façon préférentielle le rayonnement est un rayonnement optique dans la gamme du visible. Dans cette gamme de fréquences la couche céramique est transparente et le moyen de chauffage agit directement au niveau de la couche d'alumine. Selon l'épaisseur de celle-ci, et par suite de son pouvoir isolant, la dissipation de la chaleur s'effectue plus ou moins bien en direction du substrat et donc plus ou moins de chaleur se dirige vers la surface de la pièce à évaluer.

Avantageusement le rayonnement est assuré par l'éclairement d'au moins une lampe halogène. On dispose ainsi d'une lampe de forte puissance rayonnant dans toute la plage du visible.

De façon préférentielle la mesure de la température de surface est effectuée par une caméra fonctionnant dans l'infrarouge.

L'invention porte en particulier sur l'application du procédé ci-dessus à la mesure de l'endommagement d'une aube de turbine de turbomachine.

L'invention sera mieux comprise, et d'autres buts, détails, caractéristiques et avantages de celle-ci apparaîtront plus clairement au cours de la description explicative détaillée qui va suivre, d'un ou plusieurs modes de réalisation de l'invention donnés à titre d'exemples purement illustratifs et non limitatifs, en référence aux dessins schématiques annexés.

Sur ces dessins :
- la figure 1 est une vue schématique de la constitution physique d'une barrière thermique pour aube de turbine ;
- la figure 2 est une vue d'un montage expérimental pour la mise en oeuvre de la méthode, selon l'invention, d'évaluation de l'endommagement d'une barrière thermique ;
- la figure 3 est une figure donnant l'évolution en fonction du temps de la température de surface de plusieurs d'échantillons, au cours de la mise en oeuvre de la méthode selon l'invention ;
- la figure 4 est une figure donnant la relation entre la température maximale atteinte au cours de la mise en oeuvre de la méthode selon l'invention, et l'endommagement subi auparavant par les échantillons évalués.

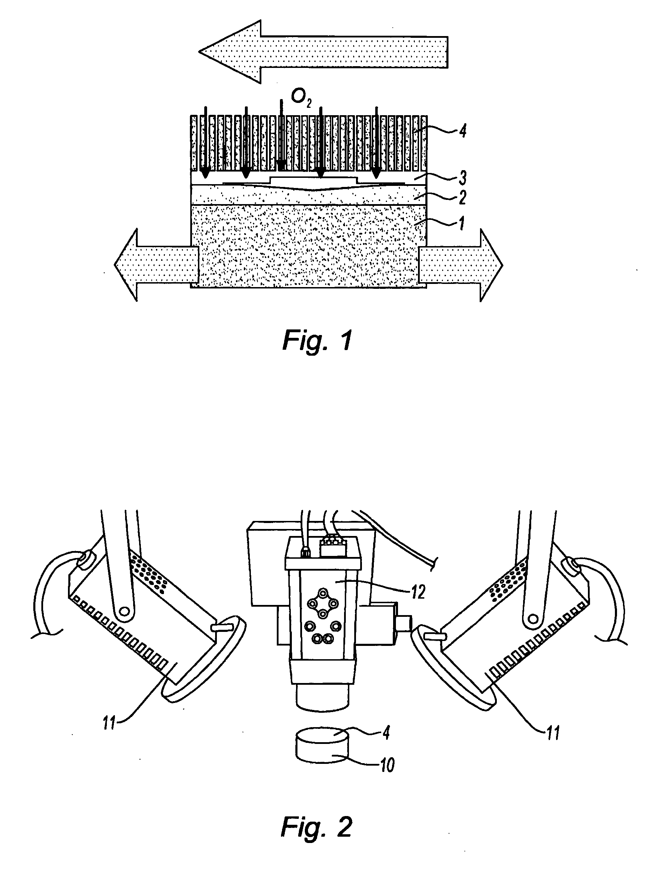

En se référant à la figure 1, on voit en coupe la composition d'une barrière thermique déposée sur la surface d'une aube de turbine. Le métal constituant l'aube, typiquement un super alliage à base nickel, forme un substrat 1 sur lequel est déposée une couche d'aluminium 2, prise en sandwich entre le substrat 1 et une couche céramique 4. La fonction de la couche d'aluminium est d'offrir une certaine élasticité à l'ensemble pour lui permettre d'absorber la différence de dilatation existant entre le substrat 1 à forte dilatation et la céramique 4 à faible dilatation.

La céramique 4 est à structure colonnaire, ce qui autorise des déplacements latéraux, du fait de l'apparition de fissures entre les colonnes. Mais une des conséquences en est que l'aluminium est mis en contact avec de l'oxygène véhiculé par les gaz qui circulent dans la veine de la turbomachine. La couche d'aluminium 2 est ainsi transformée, sur une épaisseur donnée, en une couche d'alumine 3. L'épaisseur de la couche d'alumine est fonction du temps passé à des températures élevées, ce qui constitue un marqueur de l'endommagement subi par la barrière thermique. L'invention consiste à proposer une technique de mesure de l'épaisseur de ladite couche d'alumine 3.

En se référant maintenant à la figure 2 on voit un appareillage susceptible d'être utilisé pour l'analyse, à l'aide de la méthode selon l'invention, de l'endommagement subi par une barrière thermique au cours de sa vie.

La pièce 10 recouverte d'une barrière thermique, telle que décrite à la figure 1, dont on cherche à mesurer l'endommagement est placée en vis à vis d'un système de chauffage 11, représenté ici sous la forme de deux projecteurs à lampe halogène. Un moyen de mesure 12 de la température de surface de la pièce 10 est placé en face d'elle, auquel est associé un moyen d'enregistrement (non représenté) de l'évolution de la température mesurée. Dans l'expérimentation effectuée, sans que cette configuration soit impérative, le moyen de mesure 12 est une caméra thermique à matrice de bolomètres non refroidis qui a une fréquence de fonctionnement de 50 Hz et une résolution de 320x240.

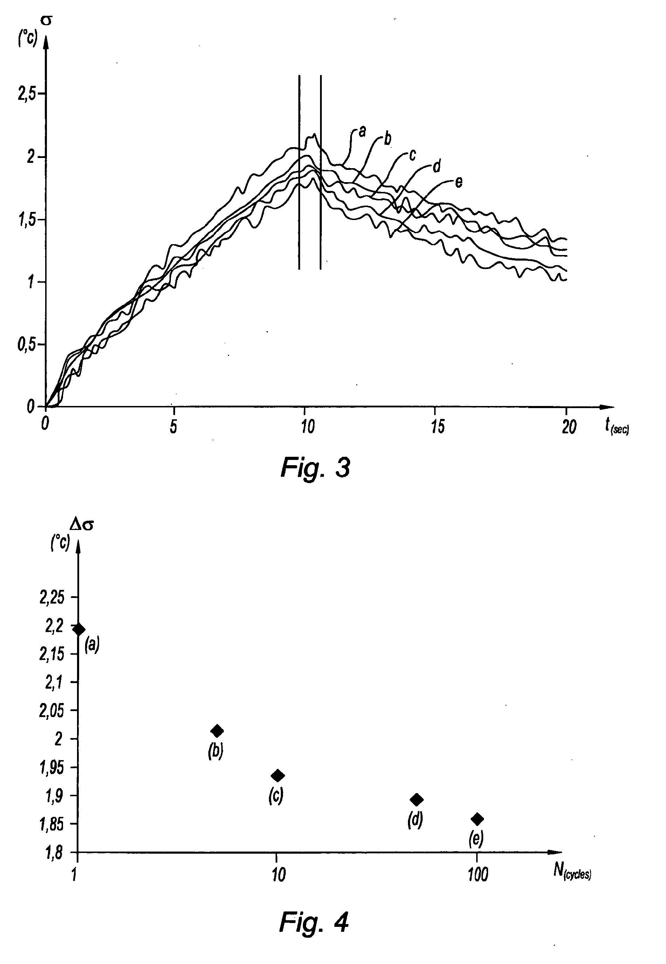

La figure 3 montre l'évolution de la température de surface σ de la pièce 10, mesurée par le dispositif de la figure 2 lors d'un chauffage pendant un temps calibré (typiquement 10 secondes) puis lors du refroidissement qui s'ensuit. Cette évolution est représentée pour cinq échantillons, référencés de "a" à "e" sur la figure, qui ont la même forme de pions cylindriques et qui sont recouverts d'une barrière thermique analogue à celle que l'on souhaite évaluer sur les aubes en service. Ces cinq pions ont subi des vieillissements différents, correspondant respectivement à 0, 5, 10, 50 ou 100 cycles standards de vieillissement pour les cinq courbes représentées. Un cycle de vieillissement correspond à des périodes de mise en température, suivies de périodes de refroidissement, qui sont censées être représentatives de l'endommagement subi par les pièces d'une turbomachine pendant un vol.

Le nombre de cycles subi par les différents pions 10 représente ainsi un certain nombre d'heures de fonctionnement d'une aube de turbine munie de la barrière thermique en évaluation. La courbe "a", la plus haute des cinq, correspond au pion 10 ayant le plus faible vieillissement alors que la courbe "e", la plus basse, correspond au pion à endommagement maximum. Les cinq courbes s'étagent les unes au dessus des autres en fonction de leur moindre vieillissement.

La figure 4 représente sur un abaque la valeur de l'échauffement maximum Δσ mesuré par le moyen de mesure 12, au bout du temps choisi pour conduire l'évaluation sur les pions 10, en fonction du nombre de cycles de vieillissement subis. On constate une décroissance régulière, et par conséquent une liaison biunivoque, entre la valeur du maximum de température observé et le nombre de cycles subis par la pièce. A un nombre de cycles subis est associé une élévation de température et une seule et, inversement, à une élévation de température peut être associé un nombre de cycles.

On va maintenant décrire la mise en oeuvre de la méthode d'évaluation de l'endommagement d'une barrière thermique selon l'invention, avec l'appareillage de la figure 2 et en prenant pour modèle d'expérimentation les pions 10 décrits ci-dessus.

Le processus débute par la mise en route de la caméra infrarouge 12 et l'allumage du moyen de chauffage 11. Le chauffage sur les pions 10 est maintenu pendant une durée prédéfinie, telle par exemple qu'une dizaine de secondes, puis est arrêté, les pions se refroidissant alors naturellement, comme indiqué sur la figure 3. Pendant tout ce temps la température de surface du pion est mesurée par la caméra infrarouge 12. En analysant les enregistrements effectués on mesure avec précision la valeur de la température maximale atteinte sur le pion 10, que l'on reporte sur un diagramme (cf. figure 4) donnant l'élévation maximale obtenue en fonction du nombre de cycles de vieillissement subis préalablement par le pion 10 considéré.

A l'aide des cinq pions évalués, qui ont des vieillissements différents, la méthode revendiquée consiste à établir la courbe de la figure 4, c'est-à-dire la relation existant entre l'échauffement maximal observé pour un temps de chauffage donné, et le vieillissement subi préalablement. Ce recueil d'informations peut bien évidemment être effectué avec un nombre de pions plus élevé et une plus grande variété dans le nombre de cycles de vieillissement des pions, afin d'obtenir une courbe de l'échauffement maximal en fonction de l'endommagement qui soit plus précise et dont on connaisse mieux la marge d'incertitude.

A partir de cette courbe il est alors possible, en appliquant à une aube dont on souhaite connaître l'état d'endommagement, un chauffage avec les mêmes moyens 11, pendant une durée de chauffe égale à celle utilisée pour l'établissement de la courbe, de mesurer la température maximale atteinte. L'endommagement qu'elle a subi s'obtient alors très simplement en reportant la valeur mesurée sur la courbe de la figure 4 et en en déduisant, en abscisses, le nombre de cycles subis. Connaissant ce nombre de cycles il est alors facile d'en déduire la durée de vie restante de la pièce pour, soit la remettre en service pour une durée donnée, soit l'envoyer en réparation pour régénérer sa barrière thermique.

L'avantage apporté par l'invention réside dans une meilleure utilisation des aubes avec un envoi en réparation des seules aubes réellement endommagées et une utilisation optimale des aubes en service. Le résultat est une augmentation du temps moyen entre pannes MTBF (ou Mean Time Between Failures) et/ou du temps moyen entre déposes TBO (ou Time Between Overhaul), ce qui se traduit par une réduction tout à fait sensible du coût global de possession de la turbomachine.

Le principe de la méthode mise en oeuvre par l'invention repose sur une mesure de l'épaisseur d'alumine grâce à la propriété qu'a la céramique utilisée pour les barrières thermiques des aubes d'être transparente à la lumière visible. Les photons en lumière visible émis par les lampes halogènes traversent la couche de céramique 4 pour atteindre la couche d'alumine 3 et la réchauffer. L'alumine étant un isolant, la chaleur reçue a tendance à se dissiper préférentiellement du côté de la couche céramique 4, plutôt qu'à l'intérieur de la couche d'aluminium 2 et du substrat 1. Cette dissipation s'effectue donc différemment selon l'épaisseur de la couche d'alumine existant dans la barrière thermique et donc selon le vieillissement que l'aube a subi antérieurement. Plus le vieillissement subi est important, plus grande est l'épaisseur de la couche d'alumine et plus le flux de chaleur se dirige vers la couche céramique ; la conséquence en est une plus forte température de surface pour la pièce. La mesure de la température en surface de l'aube par la caméra thermique 12 donne ainsi une mesure précise du vieillissement subi préalablement.

Cette méthode d'analyse de l'endommagement a été décrite avec l'utilisation d'une lumière visible et en utilisant la propriété de transparence de la céramique à cette longueur d'onde. Elle pourrait aussi être mise en oeuvre avec des rayonnements émettant sur d'autres longueurs d'ondes, après une adaptation de la forme de la figure de la figure 4. Dans le cas où la céramique ne serait pas transparente à la longueur d'onde choisie, la dissipation de la température apportée s'effectuerait de façon différente du fait de l'influence apportée par l'alumine et son caractère isolant ; la forme de la courbe de la figure 4 serait alors elle aussi différente. Il n'en reste pas moins que la présence d'une couche plus ou moins importante d'alumine entre la céramique et le substrat donnera des variations dans l'évolution de la température de surface de la pièce ; il sera alors possible, moyennant éventuellement des adaptations à la portée d'un homme du métier après une expérimentation adaptée, d'analyser les évolutions de température de surface et de retrouver, grâce à elles, l'endommagement qu'a subi la barrière thermique.

## Revendications

1. Procédé d'évaluation de l'endommagement d'une barrière thermique déposée sur une aube de turbine réalisée dans un substrat métallique (1), ladite barrière thermique comprenant une sous-couche en aluminium (2) et une couche en matériau céramique (4) à structure colonnaire orientée perpendiculairement audit substrat, ladite sous-couche (2) étant positionnée entre ledit substrat (1) et la dite couche céramique (4), ladite aube étant destinée à être placée en utilisation au contact d'un milieu gazeux oxydant et générateur dudit endommagement par oxydation de ladite sous-couche, ledit endommagement étant défini par l'épaisseur de métal oxydé figurant dans ladite sous-couche, **caractérisé en ce qu'**il comprend une première étape d'étalonnage comprenant au moins les sous-étapes suivantes :
- sélection d'un nombre déterminé de pièces d'étalonnage (10) réalisées dans ledit substrat (1) et recouvertes de ladite barrière thermique, lesdites pièces d'étalonnage ayant subi des endommagements par exposition durant des durées différentes à des conditions d'oxydation représentatives de ladite utilisation,
- exposition, pendant un temps donné, desdites pièces d'étalonnage (10) à un rayonnement électromagnétique,
- mesure de la température obtenue en surface au bout dudit temps, pour chaque pièce d'étalonnage (10),
- établissement d'une courbe d'étalonnage reliant l'augmentation de température mesurée à l'endommagement subi,
et une seconde étape de mesure de l'endommagement de la barrière thermique de ladite aube comprenant les sous-étapes suivantes :
- exposition audit rayonnement de la pièce à évaluer pendant ledit temps donné,
- mesure de la température obtenue en surface au bout dudit temps,
- report de l'augmentation de température mesurée au bout dudit temps sur la courbe d'étalonnage, et
- extraction de l'endommagement à partir de ladite courbe d'étalonnage.

2. Procédé selon la revendication 1 dans lequel le rayonnement est un rayonnement optique dans la gamme du visible.

3. Procédé selon la revendication 2 dans lequel le rayonnement est assuré par l'éclairement d'au moins une lampe halogène (11).

4. Procédé selon l'une des revendications 1 à 3 dans lequel la mesure de la température de surface est effectuée par une caméra fonctionnant dans l'infrarouge (12).

## Patentansprüche

1. Verfahren zur Beurteilung der Beschädigung einer Wärmeschranke, die auf einer Turbinenschaufel angebracht und aus einem metallischen Substrat (1) hergestellt ist, wobei die Wärmeschranke eine Unterschicht aus Aluminium (2) und eine Schicht aus Keramikmaterial (4) mit Säulenstruktur, die senkrecht auf das Substrat ausgerichtet ist, umfasst, wobei die Unterschicht (2) zwischen dem Substrat (1) und der Keramikschicht (4) angeordnet ist, wobei die Turbinenschaufel dazu bestimmt ist, bei der Verwendung in Kontakt mit einem oxidierenden gasförmigen Medium, das die Beschädigung durch Oxidation der Unterschicht erzeugt, angeordnet zu sein, wobei die Beschädigung durch die Dicke von oxidiertem Metall, das in der Unterschicht vorhanden ist, definiert wird, **dadurch gekennzeichnet, dass** es einen ersten Schritt der Kalibrierung umfasst, der mindestens die folgenden Unterschritte umfasst:
- Auswahl einer bestimmten Anzahl von Kalibrierstücken (10), die aus dem Substrat (1) hergestellt und mit der Wärmeschranke überzogen sind, wobei die Kalibrierstücke Beschädigungen unterzogen werden, da sie während unterschiedlicher Zeitdauern Oxidationsbedingungen, die für die Verwendung repräsentativ sind, ausgesetzt waren,
- Aussetzen der Kalibrierteile (10) einer elektromagnetischen Strahlung während einer gegebenen Zeit,
- Messen der erhaltenen Temperatur an der Oberfläche nach dieser Zeit für jedes Kalibrierstück (10),
- Erstellen einer Kalibrierkurve, die die gemessene Temperaturerhöhung mit der erlittenen Beschädigung in Verbindung setzt,
und einen zweiten Schritt des Messens der Beschädigung der Wärmeschranke der Schaufel, umfassend die folgenden Unterschritte:
- Aussetzen des zu beurteilenden Stücks der Strahlung während der gegebenen Zeit,
- Messen der erhaltenen Temperatur an der Oberfläche nach dieser Zeit,
- Eintragen der gemessenen Temperaturerhöhung nach dieser Zeit in die Kalibrierkurve, und
- Entnahme der Beschädigung aus der Kalibrierkurve.

2. Verfahren nach Anspruch 1, bei dem die Strahlung eine optische Strahlung im sichtbaren Bereich ist.

3. Verfahren nach Anspruch 2, bei dem die Strahlung durch Leuchten mindestens einer Halogenlampe (11) gewährleistet wird.

4. Verfahren nach einem der Ansprüche 1 bis 3, bei dem das Messen der Oberflächentemperatur durch eine im Infrarotbereich funktionierende Kamera (12) erfolgt.

## Claims

1. A method for evaluating the damage to a thermal barrier deposited on the surface of a turbine blade formed in a metal substrate (1), said thermal barrier comprising an aluminum underlayer (2) and a layer of ceramic material (4) with a columnar structure oriented perpendicularly to said substrate, said underlayer (2) being positioned between said substrate (1) and said ceramic layer (4), said blade being designed to be placed in use in contact with an oxidizing gaseous medium and generator of said damage by oxidation of said underlayer, said damage being defined by the thickness of oxidized metal present in said underlayer,
**characterized in that** it comprises a first calibration step comprising at least the following sub-steps:
- selection of a given number of calibration elements (10) formed in said substrate (1) and covered by said thermal barrier, said calibration elements having been subjected to damage by exposure for different periods of time to oxidation conditions representative of said use,
- exposure, for a given period of time, of said calibration elements (10) to an electromagnetic radiation,
- measurement of the temperature obtained on the surface after said time, for each calibration element (10),
- establishment of a calibration curve relating the increase in measured temperature to the damage suffered,
and a second step for measurement of the damage to the thermal barrier of said blade comprising the following sub-steps:
- exposure to said radiation of the element to be evaluated for said given period of time,
- measurement of the temperature obtained on the surface after said time,
- plot of the increase in measured temperature after said time on the calibration curve, and
- extraction of the damage from said calibration curve.

2. The method as claimed in claim 1 in which the radiation is optical radiation in the visible range.

3. The method as claimed in claim 2 in which the radiation is provided by the illumination of at least one halogen lamp (11).

4. The method as claimed in one of claims 1 to 3 in which the measurement of the surface temperature is carried out by a camera operating in the infrared (12).
